# EUROPÄISCHE PATENTSCHRIFT

(11) **EP 0 989 683 B1**
(45) Veröffentlichungstag und Bekanntmachung des Hinweises auf die Patenterteilung: **28.06.2006**
(21) Anmeldenummer: 99118335.1
(22) Anmeldetag: 15.09.1999
(51) Int. Cl.: H04B 1/38, H04M 1/72, H04Q 7/32, H04B 1/16, H04M 1/725

(54) **Mobiltelefon mit SIM-Kartenleser**
Mobile phone with SIM card reader
Téléphone mobile avec lecteur SIM

(30) Priorität: 23.09.1998 DE 19843701
(43) Veröffentlichungstag der Anmeldung: 29.03.2000
(73) Patentinhaber: Nokia Corporation, 02150 Espoo (FI)
(72) Erfinder: Bläcker, Bernhard, 57580 Gebhardshein (DE); Scheiba, Frank, 48249 Dülmen (DE); Petterson, Juha-Pekka, 36200 Kangsala (FI); Malmlund, Heikki, 33800 Tampere (FI); Sirola, Jukka, 33580 Tampere (FI); Peter, Detlef, 89346 Bibertal (DE)
(74) Vertreter: Becker Kurig Straus

(56) Entgegenhaltungen:
- DE-A- 4 128 686
- DE-A- 4 321 381
- US-A- 4 908 523
- US-A- 5 353 328
- US-A- 5 418 837

## Beschreibung

Die vorliegende Erfindung betrifft ein Mobiltelefon, insbesondere ein Mobiltelefon, bei dem die Individualisierung mit Hilfe einer sogenannten SIM-Karte (Subscriber Identity Module; Teilnehmer Identitätsmodul) erfolgt.

Mobiltelefone, die speziell für den Einbau in Fahrzeugen vorgesehen sind, bestehen üblicherweise aus einer z.B. in der Mittelkonsole oder im Armaturenbrett einzubauenden Einbaueinheit und einem als Bedienungsgerät dienenden Handapparat. Da bei einer derartigen Einbaueinheit Systemanschlüsse, wie sie für Test- und Wartungszwecke sowie zum Aktualisieren von Steuerprogrammen und anderer Software benötigt werden, üblicherweise auf der ohne Ausbau des Geräts nicht zugänglichen Rückseite angeordnet sind, lassen sich Test-, Wartungs- und Aktualisierungsarbeiten nur umständlich und mit erheblichem Kostenaufwand durchführen. Um jedoch die Individualisierung des Mobiltelefons auf einfache Weise zu ermöglichen, befindet sich bei derartigen Mobiltelefonen auf der Frontseite der Einbaueinheit üblicherweise ein Steckplatz für eine SIM-Karte, insbesondere für eine sogenannte Smart Card auf der das SIM-Modul untergebracht ist.

Bei Hand-Mobiltelefonen, also bei sogenannten Handys, werden aus Platzgründen fast ausschließlich sogenannte Plug-in SIM-Karten (Minikarten) eingesetzt. Diese werden bei Handys häufig unter dem Akkumulatormodul in einen entsprechenden Steckplatz eingelegt oder eingeschoben, so daß sie über ein entsprechendes Kontaktfeld mit der Steuer-einheit des Mobiltelefons verbunden sind. Bei Hand-Mobiltelefonen befinden sich dann die Anschlüsse für Test-, Wartungs- und Aktualisierungsaufgaben häufig am Boden des Mobiltelefons, wo auch weitere Anschlüsse, beispielsweise zum Anschluß an ein Ladegerät oder zum Anschluß an eine Freisprechanlage vorgesehen sind.

Derartige zusätzliche Anschlußkontakte sind jedoch unerwünscht, da sie einer weiteren Miniaturisierung von Hand-Mobiltelefonen entgegenstehen und außerdem verhältnismäßig leicht beschädigt werden können.

Aus der US 5,353,328 ist bereits ein Adapter bekannt, mit dessen Hilfe eine Datenleitung an das SIM-Kontaktfeld eines Mobiltelefons angeschlossen werden kann. Dieser bekannte Adapter weist neben dem Datenanschluß auch einen SIM-Steckplatz mit einem entsprechenden SIM-Kontaktfeld auf, so daß die Individualisierung des Mobiltelefons auch bei Verwendung des Adapters vorgenommen werden kann. Um die über die Datenleitung eingehenden Daten an die Steuereinheit des Mobiltelefons weiterleiten zu können, ist ein Pufferspeicher und ein Prozessor vorgesehen, der das ankommende Datenformat in ein Datenformat umwandelt, das über eine übliche SIM-Schnittstelle übertragen werden kann. Insbesondere wandelt der Prozessor dabei das ankommende Datenformat entsprechend dem SMS-Standard (Short Message Service; Kurznachrichtendienst) um, mit dem auch wie allgemein üblich Kurznachrichten von der Steuereinheit des Mobiltelefons zur SIM-Karte und zurück übertragen werden können.

Bei der Datenübertragung von und zum Mobiltelefon mit Hilfe dieses bekannten Adapters sind also die Daten vor der Übertragung zunächst in ein dem SMS-Standard entsprechendes Format umzuwandeln und nach der Übertragung für die weitere Verarbeitung zurück zu wandeln. Für Test- und Wartungszwecke und insbesondere für Aktualisierungsaufgaben, bei denen Steuerprogramme und andere Software geändert werden müssen, ist ein derartiger Adapter praktisch nicht einsetzbar, da eine derartige doppelte Umwandlung der Daten für diese Zwecke nicht akzeptabel ist.

Aus der DE 43 21 381 A1 ist bereits ein Mobiltelefon bekannt, das eine Steuereinheit, einen SIM-Steckplatz mit entsprechenden SIM-Kontakten aufweist. Um die in dem Mobiltelefon vorhandene Software durch eine neue Software zu ersetzen, kann eine SIM-kartenähnliche Karte, die mit einem PC verbunden ist oder die einen Speicher mit der neuen Software trägt, in den SIM-Steckplatz gesteckt werden. Ein in dem Mobiltelefon implementiertes Programm stellt fest, dass ein Austausch oder eine Änderung der Software in dem Mobiltelefon erfolgen soll, wenn anstelle einer üblichen SIM-Karte eine entsprechende Karte mit Anschluß zum PC oder mit Softwarespeicher in dem SIM-Steckplatz eingesetzt wurde, und führt den Austausch oder die Änderung der Software durch. Die Stromversorgung des Mobiltelfons erfolgt dabei in der gleichen Weise, wie im normalen Betrieb.

Die US 5,418,837 betrifft ein Verfahren und eine Vorrichtung zum Verbessern oder Aktualisieren der Software in Mobiltelefonen. Ein Mobiltelefon weist hierfür eine Leseeinheit auf, mit der sowohl SIM-Karten als auch SUM-(software up-grading module)-Karten gelesen werden können. Je nachdem, ob eine normale SIM-Karte oder eine SUM-Karte zum Verbessern und Aktualisieren des Mobiltelefons in den entsprechenden Kartenleser oder Steckplatz eingesetzt wurde, wird dann ein normaler Telefonbetrieb aufgenommen oder die Software des Telefons verbessert oder aktualisiert. Die Stromversorgung des Mobiltelfons erfolgt dabei in der gleichen Weise, wie im normalen Betrieb.

Der Erfindung liegt die Aufgabe zugrunde, ein weiteres Mobiltelefon bereitzustellen, bei dem die Spannungsversorgung auch dann sichergestellt ist, wenn ein Datenaustausch zwischen der Steuereinheit des Mobiltelefons und einem externen Datenverarbeitungssystem, beispielsweise einem PC oder einem Test- und Wartungsgerät, unter Verwendung von für den üblichen Telefonbertrieb benötigten Verbindungsmitteln durchgeführt wird.

Diese Aufgabe wird durch das Mobiltelefon nach Anspruch 1 gelöst. Vorteilhafte Ausgestaltungen und Weiterbildungen der Erfindung sind in den Unteransprüchen beschrieben.

Erfindungsgemäß ist also vorgesehen, dass die Systemanschlußmittel nicht nur dem SIM-Steckplatz zugeordnete Kontakte für die Übertragung von Daten- und Steuersignalen aufweisen, sondern während eines Test-, Wartungs- oder Aktualisierungsbetriebs von auβen mit Spannung zu versorgen.

Bei einer ersten Ausgestaltung der Erfindung ist vorgesehen, daß die Systemanschlußmittel Verbindungskontakte umfassen, die dem SIM-Steckplatz zusätzlich zu den SIM-Kontakten zugeordnet sind. Diese Ausgestaltung der Erfindung eignet sich insbesondere für Mobiltelefone, für die die SIM-Module auf sogenannten Smart Cards, das sind Karten von Kreditkartengröße, die mit moderner Mikroprozessortechnik ausgerüstet sind, untergebracht sind. Hier läßt sich problemlos ein zusätzliches Kontaktfeld, das im normalen Telefonbetrieb inaktiv ist, anordnen, ohne daß weitere mechanische Veränderungen am Gerät erforderlich wären.

Ein besonders bevorzugtes und unabhängig von der SIM-Kartengröße auf einfache Weise einsetzbares Ausführungsbeispiel der vorliegenden Erfindung zeichnet sich dadurch aus, daß die SIM-Kontakte über Umschaltmittel, die von einem Umschaltsteuersignal steuerbar sind, aufeinen Systemanschlußbetrieb umschaltbar sind. Durch die Verwendung von Umschaltmitteln lassen sich die SIM-Kontakte also unmittelbar als Verbindungskontakte der Systemanschlußmittel verwenden, ohne daß die vom GSM-(Globales System für Mobilkommunikation)-Standard vorgeschriebene Spezifikation der SIM-Kontakte verletzt wird.

Eine weitere Ausgestaltung der Erfindung zeichnet sich dadurch aus, daß ein Schaltfühler zum Unterscheiden einer SIM-Karte von einem mechanisch einer SIM-Karte entsprechenden Systemverbinder vorgesehen ist, der das Umschaltsteuersignal für die Umschaltmittel liefert, wobei der Schaltfühler ein optischer oder elektromagnetischer Detektor oder ein elektromechanisches Schaltelement ist.

Besonders bevorzugt ist es jedoch, wenn die Steuereinheit zum Unterscheiden einer SIM-Karte von einem mechanisch einer SIM-Karte entsprechenden Systemverbinder angepaßt ist und das Umschaltsteuersignal für die Umschaltmittel liefert.

Auf diese Weise Ist es möglich die zusätzlichen schaltungstechnischen Maßnahmen, auf die Umschaltmittel zum Umschalten der SIM-Kontakte von normalem SIM-Anschluß auf Systemanschluß zu beschränken, die nur äußerst wenig Platz benötigen und somit einer weiteren Miniaturisierung insbesondere von Hand-Mobiltelefonen nicht entgegenstehen.

Um bei einem Mobiltelefon, das neben einem normalen Versorgungsspannungsanschluß eine Notfallbatterie aufweist, auf die automatisch umgeschaltet wird, sobald die normale Spannungsversorgung ausfällt, die Notfallbatterie während Test-, Wartungs- und/oder Programmierarbeiten sowie beim Transport, oder falls das Mobiltelefon in einem Fahrzeugeingebaut ist, während Fahrzeugwartungs- und Reparaturarbeiten, bei denen die Fahrzeugbatterie, die normalerweise das Mobiltelefon versorgt, abgeklemmt ist, zu schonen, ist bei einer bevorzugten Weiterbildung der Erfindung vorgesehen, daß dem SIM-Steckplatz Schaltungsmittel zugeordnet sind, die ein Umschalten auf die Notfallbatterie verhindern.

Zweckmäßig ist es dabei, wenn die Schaltungsmittel einen von einem Systemverbinder oder einer SIM-Kartenähnlichen Wartungskarte betätigbaren Schaltfühler umfassen, der eine Umschaltsignalleitung sperrt. Auf diese Weise läßt sich also die Aktivierung der Notfallbatterie immer dann unterdrücken, wenn ein Systemverbinder oder eine mechanisch einer SIM-Karte entsprechende Wartungskarte in den Steckplatz eingesetzt ist. Der Schaltfühler kann dabei so ausgebildet sein, daß er auch bei fehlender Karte eine Umschaltsignalleistung sperrt, und diese nur dann freigibt, wenn eine SIM-Karte eingesetzt ist.

Bei einer anderen Ausgestaltung der Erfindung ist vorgesehen, daß die Schaltungsmittel einen zusätzlichen SIM-Kontakt aufweisen, der mit Notfall-Umschaltmitteln verbunden ist, so daß den Notfallumschaltmitteln ein Umschaltsperrsignal zuführbar ist, wenn ein SIM-Kartenähnliches Kontaktmodul oder eine entsprechende Wartungskarte in den SIM-Steckplatz eingesetzt ist.

Die Erfindung wird im folgenden beispielsweise anhand der Zeichnung näher erläutert. Es zeigen:
**Fig. 1** eine perspektivische Ansicht einer Einbaueinheit eines für ein Fahrzeug vorgesehenen Mobiltelefons;
**Fig. 2** verschiedene schematische Darstellungen eines SIM-Steckplatzes mit eingesteckter SIM-Smart-Card (a und b) sowie mit eingestecktem Systemverbinder (c).
**Fig. 3** eine schematische Draufsicht auf ein Hand-Mobiltelefon mit zeichnerisch freigeschnittenem SIM-Steckplatz.
**Fig. 4** ein stark vereinfachtes schematisches Blockschaltbild eines Mobiltelefons,
**Fig. 5** ein vereinfachtes schematisches Schaltbild von einem SIM-Kontaktfeld nachgeordneten Umschaltmitteln,
**Fig. 6** ein weiteres Schaltbild der Umschaltmittel nach Figur 5 und
**Fig. 7** ein stark vereinfachtes schematisches Blockschaltbild eines für den Einsatz in einem Kraftfahrzeug vorgesehenen Mobiltelefons.

In den verschiedenen Figuren der Zeichnung sind einander entsprechende Bauteile mit gleichen Bezugszeichen versehen.

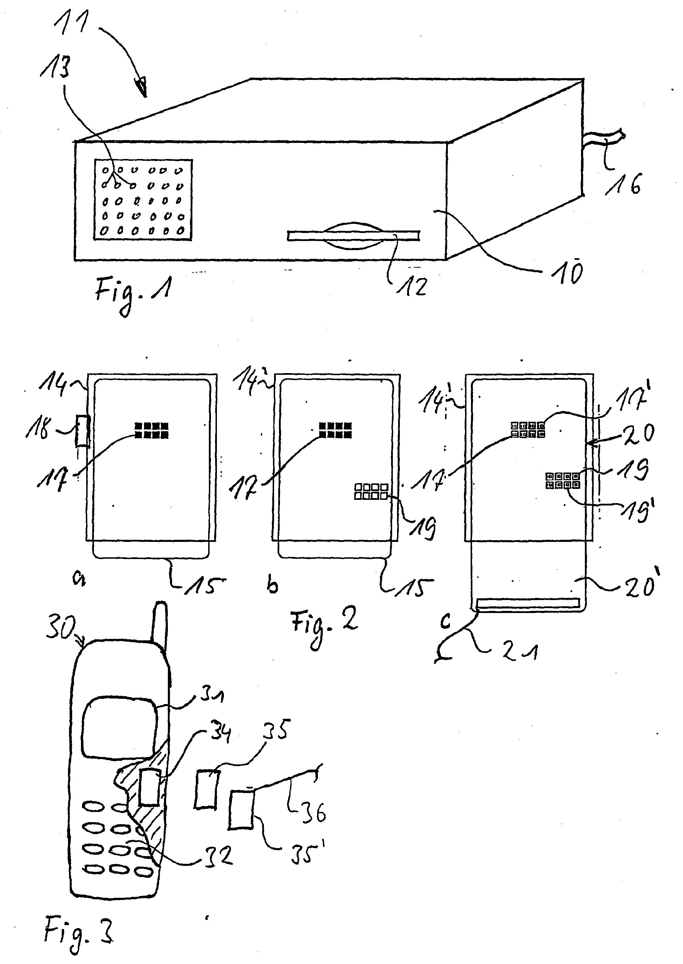

Wie in Figur 1 gezeigt, ist in einer Frontplatte 10 eines Einbaugehäuses 11 einer Einbaueinheit eines für den Einbau in Fahrzeuge gedachten Mobiltelefons eine Einstecköffnung 12 für eine SIM-Karte sowie eine Anzahl von Schallöchern 13 vorgesehen, hinter denen ein Lautsprecher angeordnet ist. Hinter der Einstecköffnung 12 ist ein in Figur 2 schematisch dargestellter Einsteckplatz 14, 14' für eine SIM-Karte 15, insbesondere für eine große SIM-Karte, also eine einer Smart Card entsprechenden SIM-Karte, angeordnet. Auf der Rückseite des Einbaugehäuses 11 befindet sich ein nicht näher dargestellter Anschluß für ein Verbindungskabel 16, das zu einem nicht dargestellten Bedienungsgerät, beispielsweise zu einem Handapparat führt.

Der in Figur 2a dargestellte Steckplatz 14 für die SIM-Karte 15 umfaßt ein in üblicher Weise angeordnetes SIM-Kontaktfeld 17, dem wie in Figur 2 nicht näher dargestellt ist, Umschaltmittel nachgeordnet sind, die in Abhängigkeit von einem von einem Schaltfühler 18 erzeugten Umschaltsteuersignal umgeschaltet werden können, um einen SIM-Anschluß oder einen Systemanschluß zu realisieren.

Dabei kann vorgesehen sein, daß das vom Schaltfühler 18 erzeugte Umschaltsteuersignal bei der Realisierung des Systemanschlusses auch dazu genutzt wird, um ein Umschalten von einer normalerweise für die Spannungsversorgung des in einem Fahrzeug eingebauten Mobiltelefons genutzten Kraftfahrzeugbatterie auf eine im Mobiltelefon integrierte Notfallbatterie zu verhindern, wenn Wartungs-, Test- und Programmierarbeiten am Mobiltelefon durchgeführt werden. Auch bei Reparatur- und Wartungsarbeiten am Fahrzeug kann die Umschaltung auf die Notfallbatterie über den Schaltfühler 18 einfach verhindert werden, wenn zu diesem Zweck in der Werkstatt eine dem Systemverbinder entsprechende Wartungskarte in den Einsteckplatz 14 eingesetzt wird.

Der Schaltfühler 18 kann dabei beispielsweise ein magnetischer oder mechanischer Schalter sein, der mit einem entsprechenden Betätigungsmittel an einem einer SIM-Karte nachgebildeten Systemverbinder zusammenwirkt. Es ist auch denkbar, daß als Schaltfühler 18 ein optischer oder elektromagnetischer Detektor vorgesehen ist. Ein elektromagnetischer Detektor kann dabei beispielsweise kapazitiv oder induktiv arbeiten.

Entsprechend Figur 2b ist an dem Steckplatz 14' neben dem SIM-Kontaktfeld 17 ein weiteres Kontaktfeld 19 mit Verbindungskontakten angeordnet, das inaktiv ist, wenn eine normale SIM-Karte 15 im Steckplatz 14' angeordnet ist.

Wird jedoch, wie in Figur 2c dargestellt, als Systemverbinder eine Anschlußkarte 20, mit entsprechenden Gegenkontaktfeldern 17', 19' in dem Steckplatz 14' angeordnet, so können je nach der Betriebsart beim Testen, bei der Wartung, beim Programmieren oder Aktualisieren oder bei einem Datenaustausch die Kontaktfelder 17, 19 gleichzeitig oder wechselweise aktiv sein.

Zweckmäßigerweise weist die Anschlußkarte 20, die entsprechend einer für den Steckplatz 14 geeigneten SIM-Karte 15 ausgebildet ist, gegenüber dieser eine Verlängerung 20' auf, die zum Anschluß eines Flachkabels 21 und zur einfacheren Handhabung dient.

Die anhand von Figur 1 und 2 beschriebenen Ausführungsbeispiele der Erfindung ermöglichen es somit, bei einem Mobiltelefon, den Steckplatz 14, 14' für die SIM-Karte 15 auch für den Anschluß eines externen Datenverarbeitungssystems, beispielsweise einem PC oder ein entsprechendes Test- oder Wartungsgerät zu nutzen, ohne daß am äußeren Aufbau des Mobiltelefons eine Änderung vorgenommen werden müßte.

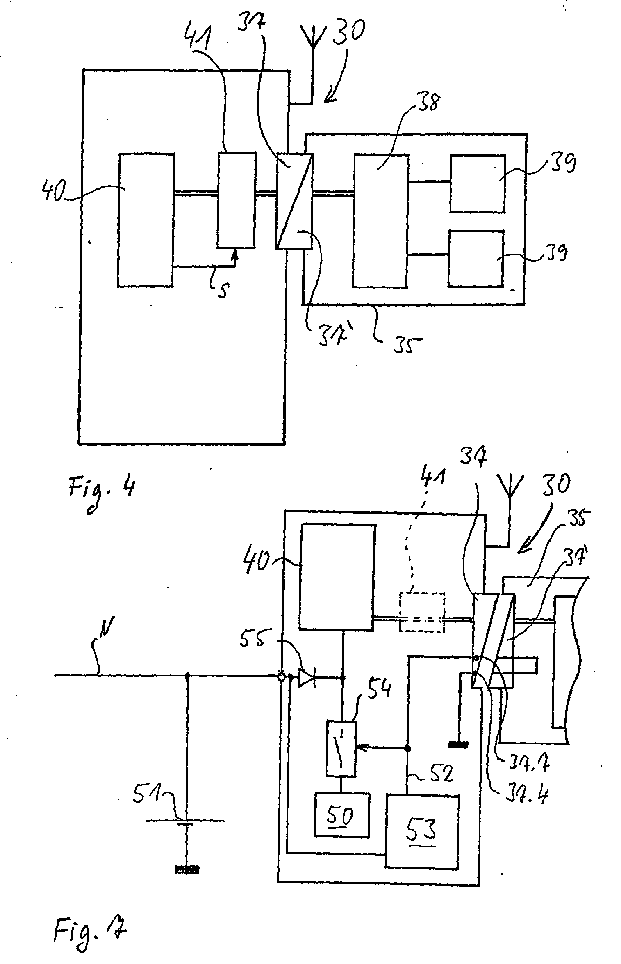

Ein weiteres bevorzugtes Ausführungsbeispiel der Erfindung wird im folgenden anhand der Figuren 3 bis 6 näher erläutert.

Figur 3 zeigt ein Hand-Mobiltelefon 30, ein sogenanntes Handy, mit einer Anzeigeeinrichtung 31 und einem Bedien-Tastenfeld 32. In dem Mobütelefon 30 ist ein SIM-Steckplatz 34 vorgesehen, der beispielsweise unter einem vom Mobiltelefon abnehmbaren Akkumulatormodul oder an einer anderen geschützten, von außen einfach zugänglichen Stelle des Mobiltelefons 30 angeordnet sein kann. In den Steckplatz 34 läßt sich eine nicht dargestellte SIM-Karte, vorzugsweise eine sogenannte Plug-In-Card oder als Systemverbinder ein an eine derartige SIM-Karte angepaßtes Kontaktmodul 35' zum Anschluß eines zu einem Datenverarbeitungssystem führenden Verbindungskabels 36 eingelegt werden.

Wird eine SIM-Karte 35 in den ein Kontaktfeld 37 aufweisenden Steckplatz 34 eingelegt, so wird ein Mikroprozessor 38 auf der SIM-Karte 35, dem auf der SIM-Karte 35 befindliche Speicher 39 zugeordnet sind, über ein Kontaktfeld 37' der SIM-Karte 35 und das Kontaktfeld 37 des Steckplatzes 34 mit einer Steuereinheit 40 (MCU, Mikrocomputereinheit) des Mobiltelefons 30 verbunden. Zwischen dem Kontaktfeld 37 und der Steuereinheit 40 sind Umschaltmittel 41 vorgesehen, mit deren Hilfe die einzelnen Kontakte 37.1 bis 37.6 des Kontaktfeldes 37 entsprechend dem Verwendungszweck als SIM-Kartenanschluß oder als System-Datenanschluß in geeigneter Weise mit zu der Steuereinheit 40 führenden Leitungen verbunden werden.

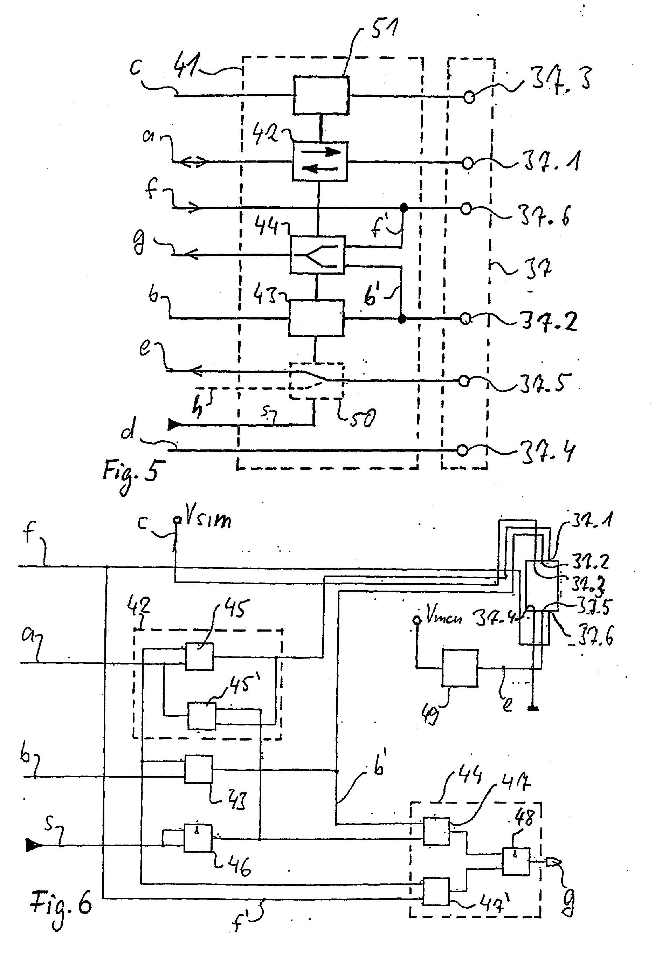

Wie In Figur 5 dargestellt, umfassen die Umschaltmittel 41 einen Richtungsschalter 42, einen Freigabeschalter 43, und einen Auswahlschalter 44. Der Richtungsschalter 42 ist in einer Leitung a zum ersten Kontakt 37.1 vorgesehen, um im normalen SIM-Betrieb die Übertragung eines Taktsignals von der Steuereinheit 40 zum Mikroprozessor 38 der SIM-Karte 35 zu ermöglichen. In einem Wartungs-, Test- oder Aktualisierungsbetrieb, insbesondere beim Neuprogrammieren zum Aktualisieren der Software der Steuereinheit 40 wird vom Kontakt 37.1 über die Leitung a in entgegengesetzter Richtung ein Taktsignal von außen, also von einem externen Datenverarbeitungssystem, an die Steuereinheit 40 übertragen. Der Richtungsschalter 42 weist hierzu, wie in Figur 6 dargestellt, zwei antiparallel geschaltete Torschaltungen 45, 45' auf, die beispielsweise als sogenannte Tri-State-Buffer ausgebildet sein können. Über eine Signalleitung s wird an die erste Torschaltung 45 und an ein als Inverter geschaltetes NAND-Glied 46 ein Umschaltsteuersignal angelegt, während das Ausgangssignal des NAND-Gliedes 46, also das invertierte Umschaltsteuersignal der zweiten Torschaltung 45' zugeführt wird. Somit ist Jeweils eine der Torschaltungen 45, 45' zum Weiterleiten eines Taktsignals aktiv, während die andere sperrt.

Um im normalen SIM-Betrieb ein Rücksetzsignal über eine Leitung b und den Kontakt 37.2 an den Mikroprozessor 38 der SIM-Karte 35 übertragen zu können, ist ein als Torschaltung ausgebildeter Freigabeschalter 43 vorgesehen, an den ebenfalls das Umschaltsteuersignal von der Leitung s angelegt ist.

Für den Systemanschluß beim Aktualisieren oder bei anderen einen allgemeinen Datenaustausch erfordernden Arbeiten sperrt der Freigabeschalter 43, so daß ein am Kontakt 37.2 anliegendes Datensignal über den Auswahlschalter 44, an eine Datenleitung g zur Steuereinheit 40 übertragen werden kann. Im normalen SIM-Betrieb verbindet die Torschaltung 44 eine mit dem Kontakt 37.6 verbundene und von der Leitung f abzweigende Leitung f' mit der Datenleitung g.

Der Auswahlschalter 44 weist dabei zwei als ODER-Glieder ausgebildete Torschaltungen 47, 47' auf, an die das invertierte Umschaltsteuersignal vom Inverter 46 bzw. das Umschaltsteuersignal von der Leitung s angelegt werden. Je nach dem, ob im SIM-Betrieb die erste Torschaltung 47' oder im Aktualisierungsbetrieb oder dergleichen die zweite Torschaltung 47 öffnet, wird der im SIM-Betrieb als Eingangs /Ausgangs-Anschluß dienende Kontakt 37.6 über die Leitungen f, f' oder der im SIM-Betrieb zum Ausgeben des Rücksetzsignals dienende Kontakt 37.2 über die Leitungen b, b' mit der zur Steuereinheit 40 führenden Leitung g verbunden. Zwischen die Ausgänge der Torschaltungen 47, 47' und die Leitung g ist dabei beispielsweise ein UND-Glied 48 als Verknüpfungselement geschaltet. Anstelle eines logischen Verknüpfungselements kann auch jedes andere Verknüpfungselement vorgesehen sein, das die störungsfreie wechselweise Verbindung der Ausgänge der Torschaltungen 47, 47' mit der Datenleitung g gewährleistet.

Falls es erforderlich ist, die Steuereinheit 40 und die anderen Schaltungselemente des Mobiltelefons 30 während eines Test-, Wartungs- oder Aktualisierungsbetriebs von außen mit Spannung zu versorgen, kann der im SIM-Betrieb nicht genutzte Kontakt 37.5 als Spannungsversorgungsanschluß genutzt werden. Dabei kann die Leitung e an eine Gleichrichter- und Glättungsschaltung 49 geführt werden, an dem die Versorgungsspannung Vmcu angelegt ist. Um sicherzustellen, daß der im SIM-Betrieb nicht benutzte Kontakt 37.5 keine Störpotentiale aufweist, kann er im SIM-Betrieb mit Hilfe eines Auswahlschalters 50, der in Figur 5 gestrichelt dargestellt ist, mit einer nicht angeschlossenen Leitung h verbunden werden. Die mit dem Kontakt 37.4 verbundene Leitung d wird unabhängig vom jeweiligen Betrieb ständig als Masseleitung verwendet.

Im SIM-Betrieb wird eine über einen Freigabeschalter 51 mit dem Kontakt 37.3 des Kontaktfelds 37 verbundene Leitung c als Spannungsversorgungsleitung für die SIM-Karte verwendet, an der die Versorgungsspannung Vsim anliegt.

Im folgenden wird der Betrieb des erfindungsgemäßen Mobiltelefons näher erläutert.

Nach dem Einschalten der Spannungsversorgung für die Steuereinheit 40 ist das Umschaltsteuersignal 1 oder HIGH, so daß die zweite Torschaltung 45' des Richtungsschalters 42 freigegeben ist, während die erste Torschaltung 45 sperrt. Gleichzeitig ist der Freigabeschalter 43 gesperrt, während die Torschaltung 47' des Auswahlschalters 44 gesperrt und dessen andere Torschaltung 47 zur Verbindung des Kontakts 37.2 über die Leitungen b, b' mit der Datenleitung g freigegeben ist.

Sind nach dem Einschalten sämtliche Kontakte 37.1 bis 37.6 des Kontaktfelds 37 spannungslos, so wird eine SIM-Karte 35 im Steckplatz 34 vermutet und das Umschaltsteuersignal auf 0 oder LOW umgestellt. Außerdem wird zur Spannungsversorgung der SIM-Karte 35 die Versorgungsspannung Vsim an den Kontakt 37.3 angelegt. Ist eine SIM-Karte 35 tatsächlich vorhanden, so wird der normale Telefonbetrieb aufgenommen, während beim Fehlen einer SIM-Karte eine entsprechende Fehlermeldung wie üblich erzeugt wird.

Ist andererseits zum Testen, Warten oder Aktualisieren der Programmierung der Steuereinheit 40 oder zu anderen Datenaustauschzwecken ein externes Datenverarbeitungssystem über ein Kabel und ein daran angebrachtes SIM-kartenähnliches Kontaktmodul 35' an die Kontakte 37.1 bis 37.6 des Kontaktfelds 37 angeschlossen, so wird von dem externen Datenverarbeitungssystem einer der Kontakte, vorzugsweise der Kontakt 37.2, der mit der Leitung b, b' verbunden ist, oder der Kontakt 37.6, der mit der durchgehenden Leitung f verbunden ist, oder der für eine externe Spannungsversorgung genutzte Kontakt 37.5 mit einem Spannungssignal beaufschlagt, anhand dessen die Steuereinheit 40 des Mobiltelefons 30 erkennt, daß kein SIM-Betrieb sondern ein Systembetrieb, z.B. ein Test-, Wartungs- oder Aktualisierungsbetrieb durchgeführt werden soll.

Die Steuereinheit 40 behält dann das Umschaltsteuersignal vom Pegel 1 oder HIGH bei, wodurch der Richtungsschalter 42 in der Taktleitung a so geschaltet bleibt, daß der Steuereinheit 40 von außen ein Taktsignal zuführbar ist. Gleichzeitig bleibt mit Hilfe des Freigabeschalters 43, der sperrt, und des Auswahlschalters 44 der Kontakt 37.2 über die Leitung b' mit der Datenleitung g verbunden, um eine zweite Leitung für den Datenaustausch zwischen dem externen Datenverarbeitungssystem und der Steuereinheit 40 zur Verfügung zu haben.

Der SIM-Steckplatz 34 mit dem Kontaktfeld 37 läßt sich nach Umschalten der Umschaltmittel auf Systembetrieb für einen Datenaustausch mit unabhängig vom SIM-Standard beliebig wählbaren Datenübertragungsprotokollen zwischen dem Mobiltelefon und einem externen Datenverarbeitungssystem benutzen. Somit können insbesondere für Test- und Wartungszwecke sowie für Aktualisierungsaufgaben erforderliche Kontakte am Mobiltelefon eingespart werden.

Obwohl der beschriebene Aufbau der Umschaltmittel 41 ein bevorzugtes Ausführungsbeispiel der Erfindung darstellt, können die Umschaltmittel 41 auch entsprechend der jeweiligen gewünschten Datenaustausch-Auf gabe oder dem verwendeten Datenübertragungsprotokoll geändert werden. Darüber hinaus ist es auch möglich, daß die Umschaltmittel 41 zusammen mit einem Schaltfühler 18 (siehe Figur 2) verwendet werden, der dann das Umschaltsteuersignal an die Signalleitung s liefert.

Figur 7 zeigt ein Mobiltelefon, das von einer externen Versorgungsspannungsquelle versorgt wird, die beispielsweise von einer ein Bordnetz N speisenden Kraftfahrzeugbatterie 51 gebildet wird. Die Steuereinheit 40 sowie die anderen Verbraucher des Mobiltelefons werden im Normalfall von der Kraftfahrzeugbatterie 51 versorgt. Im Notfall, also wenn die Kraftfahrzeugbatterie 51 beispielsweise bei einem Unfall abgerissen oder aus Sicherheitsgründen vom Bordnetz N abgesprengt wurde, werden die Steuereinheit 40 sowie die für einen Notruf erforderlichen Verbraucher von der Notfallbatterie 50 aus versorgt. Eine Diode 55 verhindert dabei, daß ein Strom aus der Notfallbatterie 50 in das Bordnetz N abfließt.

Um das Umschalten auf die Notfallbatterie zu bewirken, ist eine Spannungsüberwachungsschaltung 53 vorgesehen, die über eine Umschaltsignalleitung 52 einen Schalter 54 so steuert, daß der Schalter 54 leitend wird, wenn die Spannung am Eingang des Mobiltelefons, also an der Anode der Diode 55 unter einem unteren Grenzwert absinkt, und daß der Schalter 54 im normalen Betrieb in seinem Sperrzustand gehalten wird.

Um während Wartungsarbeiten am Kraftfahrzeug, während denen keine Spannungsversorgung des Mobiltelefons erforderlich ist, eine Aktivierung der Notfall-Spannungsversorgung zu verhindern, obwohl die Kraftfahrzeugbatterie vom Bordnetz getrennt ist, ist ein zusätzlicher SIM-Kontakt 37.7 im Kontaktfeld 37 des entsprechenden Einsteckplatzes für die SIM-Karte 35 vorgesehen, der beispielsweise mit der Umschaltsignalleitung 52 verbunden ist. Mit Hilfe einer während Wartungsarbeiten in den Einsteckplatz eingesetzten Wartungskarte, die mechanisch einer SIM-Karte gleicht, die elektrisch jedoch nur eine einzige Leitungsverbindung aufweist, mit der beispielsweise der zusätzliche SIM-Kontakt 37.7 mit dem den Masseanschluß für die SIM-Karte bereitstellenden SIM-Kontakt 37.4 verbindbar ist, läßt sich die Umschaltsignalleitung 52 auf einen festen Pegel ziehen, der dem normalen Signalpegel am Ausgang der Spannungsüberwachungsschaltung 53 entspricht. Damit läßt sich auch bei fehlender oder abgeklemmter Fahrzeugbatterie 51 ein Aktivieren der Notfall-Umschaltmittel vermeiden.

Es ist jedoch auch möglich, eine spezielle SIM-Karte für Test- und Wartungszwecke oder auch ein Kontaktmodul 35' zum Anschluß einer externen Datenverarbeitungsanlage oder dergleichen mit einer entsprechenden Leitung zu versehen, die bei eingesetzter Wartungskarte oder Kontaktmodul die Umschaltsignalleitung 52 mit Masse verbindet, so daß der Schalter 54 zuverlässig in seinem Aus-Zustand gehalten wird.

Die Deaktivierung der Notfall-Umschaltmittel 52, 53, 54 kann auch in anderer geeigneter Weise erfolgen. Beispielsweise ist es möglich, einen in der Umschaltsignalleitung 52 vorgesehenen, nicht dargestellten Schalter, der normalerweise in seinem leitenden Zustand gehalten wird, durch Anlegen eines Massesignals in seinen sperrenden Zustand zu überführen, um den Schalter 54 geöffnet, also sperrend, zu halten.

Wird als Wartungskarte nur eine einer SIM-Karte mechanisch ähnliche Karte eingesetzt, die nur einen zusätzlichen SIM-Kontakt 37.7 mit einem ausgewählten anderen Kontakt, z.B. mit dem Massekontakt 37.4 verbindet, so kann auf diese Weise zuverlässig verhindert werden, daß beim Betrieb des Mobiltelefons die Notfallumschaltung versehentlich deaktiviert wird oder deaktiviert bleibt, da der Betrieb des Mobiltelefons mit der Wartungskarte ausgeschlossen ist. Wird also nach Beendigung der Wartungsarbeiten in der Werkstatt vergessen, die Wartungskarte aus dem Einsteckplatz zu entfernen, so kann das Mobiltelefon nur dann vom Benutzer in Betrieb genommen werden, wenn er die Wartungskarte entfernt und seine SIM-Karte eingesetzt hat.

Auf diese Weise lassen sich die Nachteile der softwaremäßigen Deaktivierung der Notfall-Umschaltmittel zuverlässig ausschließen.

## Patentansprüche

1. Mobiltelefon mit
- einer Steuereinheit (40),
- einem SIM-Steckplatz (14, 14', 34) für eine SIM-Karte (15, 35),
- SIM-Kontakten (37), die dem SIM-Steckplatz (14, 14', 34) zugeordnet sind, und Systemanschlußmitteln (19, 37, 41) zum Verbinden der Steuereinheit (40) mit einem externen Datenverarbeitungssystem, die dem SIM-Steckplatz (14, 14', 34) zugeordnete Kontakte (17, 19, 37) umfassen, **dadurch gekennzeichnet, dass**
- die Systemanschlußmittel (19; 37, 41) einen Spannungsversorgungsanschluß für eine externe Spannungsversorgung über einen der SIM-Kontakte umfassen.

2. Mobiltelefon nach Anspruch 1, **dadurch gekennzeichnet, daß** die Systemanschlußmittel Verbindungskontakte (19) umfassen, die dem SIM-Steckplatz (14') zusätzlich zu den SIM-Kontakten (17) zugeordnet sind.

3. Mobiltelefon nach Anspruch 1, **dadurch gekennzeichnet, daß** die SIM-Kontakte (17, 37) über Umschaltmittel, die von einem Umschaltsteuersignal steuerbar sind, als Systemanschlußmittel umschaltbar sind.

4. Mobiltelefon nach Anspruch 3, **dadurch gekennzeichnet, daß** ein Schaltfühler (18) zum Unterscheiden einer SIM-Karte (15) von einem mechanisch einer SIM-Karte entsprechenden Systemverbinder vorgesehen ist, der das Umschaltsteuersignal für die Umschaltmittel (41) liefert.

5. Mobiltelefon nach Anspruch 4, **dadurch gekennzeichnet, daß** der Schaltfühler (18) ein optischer oder elektromagnetischer Detektor oder ein elektromechanisches Schaltelement ist.

6. Mobiltelefon nach Anspruch 3, **dadurch gekennzeichnet, daß** die Steuereinheit (40) zum Unterscheiden einer SIM-Karte (35) von einem mechanisch einer SIM-Karte entsprechenden Systemverbinder (35') angepaßt ist und das Umschaltsteuersignal für die Umschaltmittel. (41) liefert.

7. Mobiltelefon nach einem der vorstehenden Ansprüche, mit einer Notfallbatterie, auf die bei Ausfall einer normalen Versorgungsspannungsquelle (51) umgeschaltet wird, **dadurch gekennzeichnet, daß** dem SIM-Steckplatz Schaltungsmittel zugeordnet sind, die ein Umschalten auf die Notfallbatterie verhindern.

8. Mobiltelefon nach Anspruch 7, **dadurch gekennzeichnet, daß** die Schaltungsmittel einen von einem Systemverbinder oder einer SIM-Kartenähnlichen Wartungskarte betätigbaren Schaltfühler (18) umfassen, der eine Umschaltsignalleitung (52) sperrt.

9. Mobiltelefon nach Anspruch 7, **dadurch gekennzeichnet, daß** die Schaltungsmittel einen zusätzlichen SIM-Kontakt (37.7) aufweisen, der mit Notfall-Umschaltmitteln (52, 53, 54) verbunden ist, so daß den Notfallumschaltmitteln (52, 53, 54) ein Umschaltsperrsignal zuführbar ist, wenn ein SIM-Kartenähnliches Kontaktmodul (35') oder eine entsprechende Wartungskarte in den SIM-Steckplatz (34) eingesetzt ist.

## Claims

1. A mobile phone comprising:
- a control unit (40),
- a SIM card slot (14, 14', 34) for a SIM card (15, 35),
- SIM contacts (37), which are associated with the SIM card slot (14, 14', 34), and system connection means (19, 37, 41) for connecting the control unit (40) to an external data processing system, which comprise contacts (17, 19, 37) associated with the SIM card slot (14, 14', 34),
**characterised in that**
- the system connection means (19; 37, 41) comprise a voltage supply connection for an external voltage supply via one of the SIM contacts.

2. A mobile phone according to Claim 1,
**characterised in that** the system connection means comprise connection contacts (19) which are associated with the SIM card slot (14') in addition to the SIM contacts (17).

3. A mobile phone according to Claim 1,
**characterised in that** the SIM contacts (17, 37) can be switched over as system connection means via switchover means, which can be controlled by a switchover control signal.

4. A mobile phone according to Claim 3,
**characterised in that** a switching sensor (18) is provided to distinguish between a SIM card (15) and a system connector that mechanically corresponds to a SIM card and delivers the switchover control signal for the switchover means (41).

5. A mobile phone according to Claim 4,
**characterised in that** the switching sensor (18) is an optical or electromagnetic detector or an electromechanical switching component.

6. A mobile phone according to Claim 3,
**characterised in that** the control unit (40) is adapted to distinguish between a SIM card (35) and a system connector (35') that mechanically corresponds to a SIM card and that delivers the switchover control signal for the switchover means (41).

7. A mobile phone according to one of the preceding Claims, comprising an emergency battery to which switching over is performed if a normal supply voltage source (51) fails,
**characterised in that** switching means which prevent switching over to the emergency battery are associated with the SIM card slot.

8. A mobile phone according to Claim 7,
**characterised in that** the switching means comprise a switching sensor (18) that can be actuated by a system connector or a maintenance card similar to a SIM card, which blocks a switchover signal line (52).

9. A mobile phone according to Claim 7,
**characterised in that** the switching means comprise an additional SIM contact (37.7), which is connected to emergency switchover means (52, 53, 54) so that a switchover blocking signal can be supplied to the emergency switchover means (52, 53, 54) if a contact module (35') similar to a SIM card or a corresponding maintenance card is inserted into the SIM card slot (34).

## Revendications

1. Téléphone mobile, comprenant :
- une unité de commande (40),
- un emplacement d'enfichage SIM (14, 14', 34) pour une carte SIM (15, 35),
- des contacts SIM (17, 37) associés à l'emplacement d'enfichage SIM (14, 14', 34), et
- des moyens de raccordement systèmes (19; 37, 41) pour relier l'unité de commande (40) à un système de traitement de données externe, comprenant des contacts (17, 19, 37) associés à l'emplacement d'enfichage SIM (14, 14', 34),
**caractérisé en ce que**
- les moyens de raccordement système (19; 37, 41) comprennent un raccordement de tension d'alimentation pour une alimentation en tension externe, par l'intermédiaire d'un des contacts SIM.

2. Téléphone mobile selon la revendication 1, **caractérisé en ce que** les moyens de raccordement système comprennent des contacts de liaison (19) associés à l'emplacement d'enfichage SIM (14'), en plus des contacts SIM (17).

3. Téléphone mobile selon la revendication 1, **caractérisé en ce que** les contacts SIM (17, 37) peuvent être commutés, en tant que moyens de raccordement système, par l'intermédiaire de moyens de commutation, pouvant être commandés par un signal de commande de commutation.

4. Téléphone mobile selon la revendication 3, **caractérisé en ce qu'**une sonde de commutation (18) est prévue, pour distinguer une carte SIM (15) d'un connecteur système, correspondant mécaniquement à une carte SIM et fournissant le signal de commande de commutation pour les moyens de commutation (41).

5. Téléphone mobile selon la revendication 4, **caractérisé en ce que** la sonde de commutation (18) est un détecteur optique ou électromagnétique, ou un élément de commutation électromécanique.

6. Téléphone mobile selon la revendication 5, **caractérisé en ce que** l'unité de commande (40) est adaptée pour distinguer une carte SIM (35) d'un connecteur système (35'), correspondant mécaniquement à une carte SIM, et fournit le signal de commande de commutation pour les moyens de commutation (41).

7. Téléphone mobile selon l'une des revendications précédentes, avec une batterie de secours sur laquelle une commutation est effectuée en cas de défaillance d'une source de tension d'alimentation (51) normale, **caractérisé en ce que** des moyens de commutation, empêchant une commutation sur la batterie de secours, sont associés à l'emplacement d'enfichage SIM.

8. Téléphone mobile selon la revendication 7, **caractérisé en ce que** les moyens de commutation comprennent une sonde de commutation (18), pouvant être actionnée par un connecteur système ou par une carte d'entretien, analogue à une carte SIM, la sonde de commutation bloquant une ligne de signalisation de commutation (52).

9. Téléphone mobile selon la revendication 7, **caractérisé en ce que** les moyens de commutation présentent un contact SIM (37.7) supplémentaire, relié à des moyens de commutation de secours (52, 53, 54), de manière que, aux moyens de commutation de secours (52, 53, 54), peut être amené un signal de blocage de commutation lorsqu'un module de contact (35'), analogue à une carte SIM ou bien à une carte d'entretien correspondante, est inséré dans l'emplacement d'enfichage SIM (34).
